# EUROPEAN PATENT SPECIFICATION

(11) **EP 3 505 898 B1**
(45) Date of publication and mention of the grant of the patent: **19.08.2020**
(21) Application number: 18179134.4
(22) Date of filing: 21.06.2018
(51) Int. Cl.: G01M 3/12, G01M 3/38

(54) **LIQUID LEAKAGE DETECTION SYSTEM AND LIQUID LEAKAGE DETECTION METHOD**
FLÜSSIGKEITS-LECKAGE-DETEKTIONS-SYSTEM UND METHODE ZUR FLÜSSIGEN LECKAGE-DETEKTION
SYSTÈME DE DÉTECTION DE FUITE DE LIQUIDE ET PROCÉDÉ DE DÉTECTION DE FUITE DE LIQUIDE

(30) Priority: 27.12.2017 JP 2017252104; 02.02.2018 JP 2018017095
(43) Date of publication of application: 03.07.2019
(73) Proprietor: Mitsubishi Heavy Industries, Ltd., Tokyo 108-8215 (JP)
(72) Inventor: INOUE, Kanta, Tokyo, 1088215 (JP); IWASHITA, Nobuharu, Tokyo, 1088215 (JP); KUBOTA, Takahiro, Tokyo, 1088215 (JP); NISHIMIYA, Tatsuyuki, Tokyo, 1088215 (JP); YUGE, Atsushi, Tokyo, 1088215 (JP); MARUYAMA, Tatsuhiro, Tokyo, 1088215 (JP)
(74) Representative: Henkel & Partner mbB

(56) References cited:
- WO-A1-93/24820
- WO-A1-2013/164558
- JP-A- 2013 101 474
- US-A1- 2015 371 374
- US-A1- 2017 016 796

## Description

### TECHNICAL FIELD

The present disclosure relates to a liquid leakage detection system and a liquid leakage detection method.

### BACKGROUND ART

Typically, there is a variety of known techniques for detecting oil leakage from a hydraulic machine, a pipe, or the like. For instance, Patent Document 1 discloses an oil leakage detection method of using a camera to monitor a whitish fabric tape with a black powdery layer formed on one side, which is wound around an oil pipe or the like so that the black powdery layer faces inward.

### Citation List

### Patent Literature

Patent Document 1: JPH2-306132A

JP 2013 101 474 A discloses to provide an oil leakage detector capable of detecting oil leakage by a simple configuration. The oil leakage detector includes an image analysis part for calculating the intensity of a predetermined specific color of colors in respective pixels on the basis of color information in the respective pixels of a color image of an oil leakage detection target area imaged by imaging means, and a determination part for determining the presence/absence of oil on the basis of the intensity of the specific color calculated in the image analysis part.

US 10 234 355 B2 discloses leakage oil detection system, which includes a measurement device including a light source that causes a measured object which includes a leakage oil attachment part to be irradiated with ultraviolet rays, and an imaging device that detects fluorescence emitted from the leakage oil attachment part which is irradiated with the ultraviolet rays, and performs imaging on the measured object, and an analysis device that includes a driving control unit that controls operations of the light source and the imaging device, a recording unit that records an imaged image of the measured object which is imaged by the imaging device, and an image processing unit that calls the imaged image which is recorded in the recording unit and performs an image process to detect leakage oil.

### SUMMARY

However, in the liquid leakage detection method disclosed in Patent Document 1, the black powder may come out through the tape by capillary action due to not only oil leakage from a hydraulic machine or an oil pipe, but also water drops or the like adhering to the outer side of the tape. Thus, it is difficult to detect selectively only a liquid leaking or having leaked from a device such as a hydraulic machine or a pipe, and determine whether liquid leakage is occurring in the device.

In view of the above, an object of at least one embodiment of the present invention is to detect liquid leakage from a device accurately.

According to the present invention the above object is achieved by a liquid leakage detection system according to claim 1 and a method as defined in claim 12. The dependent claims are directed to different advantageous aspects of the invention.

A Leakage liquid that is leaking or that has leaked from the device changes its color to a particular color by making contact with a variety of color changing agents, and becomes visually recognizable when the color of the leakage liquid changes to such an extent that can be distinguished from the surrounding. As described above, with the above configuration (1), by utilizing the characteristics of the leakage liquid of discoloring itself upon contact with a color changing agent, it is possible to detect occurrence of liquid leakage by determining with the controller that the pixel count corresponding to the color of the discolored leakage liquid is not smaller than the threshold, in the image data obtained by the image-capturing device. By using the liquid leakage detection system having the above configuration, it is possible to continue unmanned monitoring of liquid leakage from a device around the clock, and an operator can remotely monitor presence or absence of liquid leakage from the device any time. Further, in case liquid leakage occurs, a liquid leakage warning is automatically issued, which makes it possible to take prompt measures. For instance, it is possible to detect occurrence of oil leakage or water leakage by determining with the controller that the pixel count corresponding to the color of a color changing material which discolors through contact with oil or water is not smaller than the threshold.

Depending on the arrangement of the image-capturing device, the image-capturing device may take an image of either a nearby object or a distant object. Further, in the obtained image data, an object distant from the installation position of the image-capturing device is pictured small, and a nearby object is pictured occupying a larger region. In this regard, with the above configuration (2), the pixel count is corrected by using the distance factor which is set depending on the distance from the image-capturing device, and thus the pixel count can be corrected so that the pixel count obtained in the image region corresponding to a position close to the image-capturing device and the pixel count obtained in the image region corresponding to a position distant from the image-capturing device can be treated with a relatively equivalent scale. Accordingly, it is possible to improve the determination accuracy of liquid leakage detection.

As described in the above to determine occurrence of liquid leakage more accurately, it is desirable to correct the pixel count so that a pixel count that a close image-capturing object occupies in the image data (i.e. area), and a pixel count (area) that a distant image-capturing object occupies in the image data are treated according to their actual size.

In this regard, with the above configuration (3), the greater the distance from the image-capturing device is, the greater value the distance factor is set to be. Thus, it is possible to correct the pixel count (area) in the image with a greater value for an image-capturing object farther away from the image-capturing device. Further, it is possible to improve the determination accuracy of liquid leakage detection, by determining liquid leakage by using the pixel count corrected so as to become closer to the actual area ratio.

With the above configuration, it is possible to set the importance factor independently for each image-capturing region. That is, it is possible to set an importance factor for an image-capturing region without taking account of the influence of another image-capturing region. For instance, in a case where the image data captured with the image-capturing device includes an image-capturing region with a high risk of liquid leakage, or conversely, an image-capturing region with a low risk of occurrence of liquid leakage, it is possible to correct the pixel count detected in each image-capturing region by using the importance factor set independently for each image-capturing region.

If a pixel count corresponding to the color of a discolored leakage liquid is detected in an image-capturing region with a high risk of liquid leakage, the liquid leakage may continue thereafter even if the currently detected pixel count is small. Thus, if liquid leakage is detected in this type of region, there is a greater necessity to take some measure in an early stage.

In this regard, with above configuration, the importance factor is set to be greater in an image-capturing region with a higher risk of liquid leakage from the device. Thus, if a pixel count corresponding to the color of a discolored leakage liquid is detected in this type of image-capturing region, it is possible to determine occurrence of liquid leakage in an early stage.

With the above configuration, in the captured image, it is possible to set an unnecessary region that can be ignored or a region with a low importance degree to be an excluded region that is to be excluded from the region for which liquid leakage is determined. Accordingly, it is possible to narrow down the detection object to liquid leakage that occurs in the image-capturing region to be taken into account, and thus it is possible to reduce wrong detection in a case where a color similar to that of the liquid leakage exists in the excluded region, and improve accuracy of liquid leakage detection.

With the above configuration, for instance, it is possible to set with the setting part in advance to exclude, from the object of determination of liquid leakage, a member having a color similar to that of the discolored leakage liquid or an accidentally-adhering liquid that has no relation to oil leakage from the device, which may be included in the image. Accordingly, determination can be performed by using the pixel count corresponding to the actual liquid leakage from the device to be detected, and thus it is possible to reduce wrong detection and improve detection accuracy.

With the above configuration, when liquid leakage is detected, it is possible to inform an operator of the above leakage detection system or the like of detection of liquid leakage by a variety of methods. Accordingly, it is possible to take prompt measures, for instance, following occurrence of liquid leakage.

With the above configuration, the leakage liquid from the device is oxidized and discolored from reaction with oxygen in air, and the image-capturing device captures an image of the discolored leakage liquid. Thus, it is possible to detect the leakage liquid from the device without requiring a color changing agent other than oxygen in the air.

With the above configuration, at least a part of the outer periphery of the device or below the device includes the pigment applied region, and thus the leakage liquid from the device makes contact with the pigment and changes its color. That is, it is no longer necessary to wait for color change caused by oxidization of the leakage liquid to happen, which makes it possible to reduce the time lag between occurrence of liquid leakage and color change, and to shorten considerably the time from occurrence of liquid leakage to detection of occurrence of the liquid leakage. For instance, it is possible to detect occurrence of liquid leakage real time. Further, by selectively using a type of pigment that shows color only upon reaction with a particular liquid used in the device, it is possible to easily determine liquid leakage in the captured image, which makes it possible to improve the accuracy in detection of occurrence of liquid leakage.

With the above configuration, for a leakage liquid from the device normally falls downward, it is possible to detect occurrence of liquid leakage from the device more appropriately by capturing, with the image-capturing device, an image of the color of the leakage liquid adhering to the liquid absorption member disposed below the device. Furthermore, for instance, even if there is a blind spot on the device itself or around thereof, it is possible to detect liquid leakage by arranging the image-capturing device in a position where an image of the liquid absorption member can be captured. Thus, it is possible to obtain a low-cost liquid leakage detection system capable of detecting the leakage liquid appropriately with a smaller number of image-capturing devices.

With the above configuration, it is possible to display, on the display part, a combination of the image including the leakage liquid from the device and either one of the time-series change history of the pixel count or the result of determination by the controller, and thus an operator can visually monitor presence or absence of liquid leakage from the device, the extent of liquid leakage, the progression rate of liquid leakage, or the like.

According to the above method, as described in the above (1), it is possible to detect occurrence of liquid leakage by determining, in the detection step, that the pixel count corresponding to the color of the discolored leakage liquid is not smaller than the threshold, in the image data obtained in the image-capturing step.

According to the above method, when liquid leakage is detected, it is possible to inform an operator of the above leakage detection system or the like of detection of liquid leakage by a variety of methods. Accordingly, it is possible to take prompt measures, for instance, following occurrence of liquid leakage.

According to the above method, it is possible to display, on the display part, a combination of the image including the leakage liquid from the device and either one of the time-series change history of the pixel count or the result of determination in the detection step, and thus an operator can visually monitor presence or absence of liquid leakage from the device, the extent of liquid leakage, the progression rate of liquid leakage, or the like.

As described above, according to some embodiments of the present invention, it is possible to detect liquid leakage from a hydraulic device selectively.

### BRIEF DESCRIPTION OF DRAWINGS

FIG. 1 is a schematic diagram of a configuration example of a liquid leakage detection system according to an embodiment.
FIG 2 is a block diagram of a configuration example of a control system of a liquid leakage detection system according to an embodiment.
FIG. 3 is a flowchart showing a process by a liquid leakage detection system according to an embodiment.
FIG. 4 is a diagram showing an example of a control display according to an embodiment.
FIG. 5 is a schematic diagram showing an offset process according to an embodiment.
FIG. 6 is a schematic diagram of a configuration example of a liquid leakage detection system according to another embodiment.
FIG. 7 is a schematic diagram of a liquid leakage detection process according to an embodiment.

### DETAILED DESCRIPTION

Embodiments of the present invention will now be described in detail with reference to the accompanying drawings. It is intended, however, that unless particularly identified, dimensions, materials, shapes, relative positions and the like of components described in the embodiments shall be interpreted as illustrative only and not intended to limit the scope of the present invention.

For instance, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

For instance, an expression of an equal state such as "same" "equal" and "uniform" shall not be construed as indicating only the state in which the feature is strictly equal, but also includes a state in which there is a tolerance or a difference that can still achieve the same function.

Further, for instance, an expression of a shape such as a rectangular shape or a cylindrical shape shall not be construed as only the geometrically strict shape, but also includes a shape with unevenness or chamfered corners within the range in which the same effect can be achieved.

On the other hand, an expression such as "comprise", "include", "have", "contain" and "constitute" are not intended to be exclusive of other components.

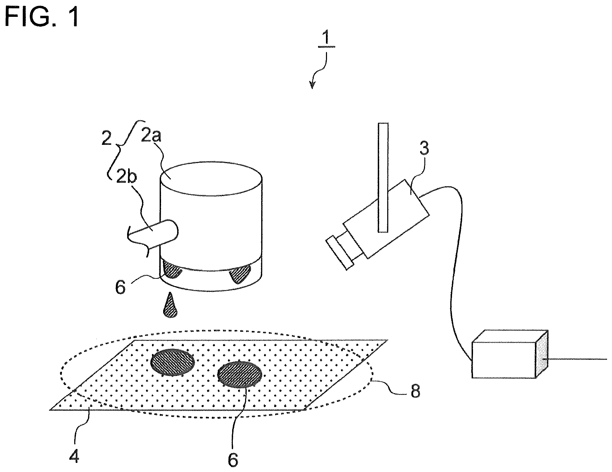

FIG. 1 is a schematic diagram of a configuration example of a liquid leakage detection system according to an embodiment.

As shown in FIG. 1 as a non-limited example, the liquid leakage detection system 1 according to at least one embodiment of the present invention is a liquid leakage detection system 1 for detecting liquid leakage from a device 2, and includes an image-capturing device 3 for capturing an image of a leakage liquid 6 from the device 2, and a controller 10 for detecting occurrence of liquid leakage by using image data obtained by the image-capturing device 3.

A variety of devices (e.g. hydraulic device) which use a liquid such as water, vapor, and oil as a working fluid or a heat medium may be applied to the device 2. This device 2 may include a device body 2a, a pipe 2b which is connected to the device body 2a and through which a liquid flows, and the like.

To the image-capturing device 3, a visible-light camera capable of capturing an image of light in the visible-light range may be applied. FIG. 1 shows an example where the liquid leakage detection system 1 includes a single image-capturing device 3, to simplify the description. In some embodiments, a single device 2 may be monitored by a plurality of image-capturing devices 3. Alternatively, a plurality of devices 2 each may be monitored by a single or a plurality of image-capturing devices 3.

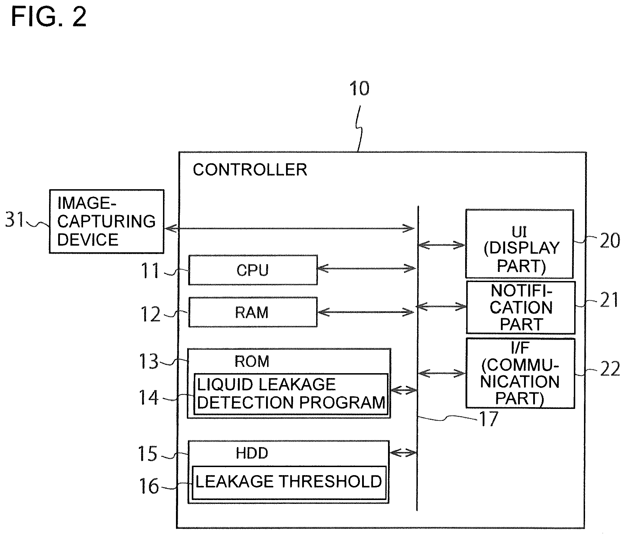

FIG. 2 is a block diagram of a configuration example of a control system of a liquid leakage detection system according to an embodiment.

As shown in FIG. 2 as a non-limited example, the controller 10 is a computer, for instance, and may include a CPU 11, an ROM 13 as a memory part for storing data such as various programs and tables to be executed by the CPU 11, an RAM 12 which functions as a work region such as an expansion region and a calculation region for executing various programs, and further, a hard disk drive (HDD) 15 as a mass storage, a communication interface 22 as a communication part for connecting to a communication network, and an access part (not shown) to which an external storage device is mounted. The above components are all connected via a bus 17, and the bus 17 is connected to the image-capturing device 3 electrically via a signal line such as a cable.

Further, the controller 10 according to an embodiment is configured to determine whether a pixel count corresponding to the color of the leakage liquid 6 that is discolored by contact with a color changing agent 7 outside the device 2 is not smaller than a threshold, and determine that liquid leakage is occurring if the pixel count is not smaller than the threshold. In the controller 10 according to an embodiment, a liquid leakage detection program 14 for performing the above process may be stored in the ROM 13, for instance.

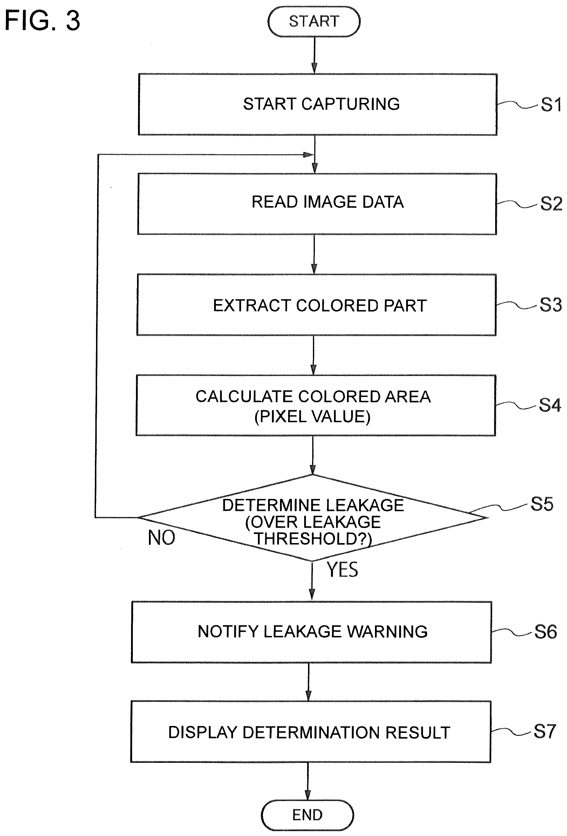

FIG. 3 is a flowchart showing a process example by a liquid leakage detection system according to an embodiment. As shown in FIG. 3 as a non-limited example, as the process starts, the CPU 11 reads out the liquid leakage detection program 14 from the ROM 13 , expands the same in the RAM 12, and executes the same, whereby the leaking oil detection process is started. The controller 10 starts the image-capturing device 3, and begins capturing an image of the device 2 which can be captured from the installation site (step S1). As the image-capturing starts, the CPU 11 reads in the image data obtained by the image-capturing device 3 (step S2), and identifies a pixel having a pixel value of a color similar to that of the discolored leakage liquid 6, from the image data (a pixel having a pixel value whose color components, such as RGB, are each in a predetermined range), thereby extracting a discolored part (step S3). The pixel value of a color similar to that of the discolored leakage liquid 6 may be set in advance and stored in a memory such as the ROM 13 and the HDD 15. The CPU 11 adds up the number of pixels (pixel count) extracted as above, and calculates an area of a discolored part within the image 30 (step S4). In an embodiment, the sum of the number of pixels having the corresponding pixel value may be used as the discolored area. Next, the CPU 11 determines whether the pixel count calculated in step S4 is greater than the threshold, and thereby determines whether the leakage liquid 6 is detected (step S5). If the pixel count calculated in step S4 is not greater than the threshold (step S5; No), the CPU 11 proceeds to step S2 and reads in the next image data, continuing the process. If the pixel count calculated in step S4 is greater than threshold (step S5; Yes), the CPU 11 determines that liquid leakage is present.

Herein, the leakage liquid 6 from the device 2 changes its color to a particular color or changes the color of a color changing agent 7 to a particular color, by making contact with a variety of color changing agents 7, and becomes visually recognizable when the color changes to such extent that it can be distinguished from the surrounding. As described above, with the above configuration, by utilizing the characteristics of the leakage liquid 6 of discoloring itself or discoloring the color changing agent 7 upon contact with the color changing agent 7, it is possible to detect occurrence of liquid leakage by determining with the controller 10 that the pixel count corresponding to the color of the discolored leakage liquid 6 is not smaller than the threshold, in the image data obtained by the image-capturing device 3. By using the liquid leakage detection system 1 with the above configuration, it is possible to detect liquid leakage from the device 2 selectively with a high accuracy. Furthermore, it is possible to continue unmanned monitoring around the clock, and an operator can remotely monitor presence or absence of liquid leakage from the device 2 any time. Further, in case liquid leakage occurs, a liquid leakage warning is automatically issued, which makes it possible to take prompt measures.

Further, in some embodiments, in a case where the pixel count calculated in step S4 is greater than the threshold, the CPU 11 may issue a leakage warning (step S6) to notify occurrence of liquid leakage and end the process. Accordingly, when liquid leakage is detected, it is possible to inform an operator or the like of detection of liquid leakage by a variety of methods. Accordingly, it is possible to take prompt measures, for instance, following occurrence of liquid leakage.

According to the invention, the controller 10 is configured to correct the pixel count by using a distance factor K which is set depending on the distance between the device (2) and the image-capturing device 3.

Depending on the arrangement of the image-capturing device 3, the image-capturing device 3 may take an image of either a nearby object or a distant object. Further, in the obtained image data, an object distant from the installation position of the image-capturing device 3 is pictured small, and a nearby object is pictured occupying a larger region. In this regard, with the above configuration, the pixel count is corrected by using the distance factor K which is set depending on the distance from the image-capturing device 3, and thus the pixel count can be corrected so that the pixel count in the image region 32 corresponding to a position close to the image-capturing device 3 and the pixel count in the image region 32 corresponding to a position distant from the image-capturing device 3 are treated with a relatively similar scale. Accordingly, it is possible to improve the determination accuracy in detection of liquid leakage.

Further, the above described distance factor K, a calculation expression using the distance factor K, and the position in the image 30 to which the above are to be applied (e.g. XY coordinates showing x-axis and y-axis of the image) may be set in advance taking account of the distance from the image-capturing device 3 to the object of image-capturing displayed at a predetermined position in the image 30 obtained by image-capturing (e.g. distance to the device 2, or the distance to a position where a pixel having a pixel value of a color similar to that of the discolored leakage liquid 6 may be detected), and stored in a storage part such as the ROM 13 and the HDD 15, for instance.

In some embodiments, the greater the distance from the image-capturing device 3 is, the greater the distance factor K may be set to be.

To determine occurrence of liquid leakage more accurately, it is desirable to correct the pixel count so that, in the image data, the pixel count that a close image-capturing object occupies (i.e. area), and the pixel count (area) that a distant image-capturing object occupies are treated according to the actual size.

In this regard, with the above configuration, the greater the distance from the image-capturing device 3 is, the greater value the distance factor K is set to be. Thus, it is possible to correct the pixel count (area) in the image 30 with a greater value for an image-capturing object farther away from the image-capturing device 3. Further, it is possible to improve the determination accuracy in detection of liquid leakage, by determining liquid leakage by using the pixel count corrected so as to become closer to the actual area ratio.

In some embodiments, the controller 10 may be configured to correct the pixel count by using an importance factor Ki which is set independently for each image-capturing region (e.g. image region 32) of the image data.

With the above configuration, it is possible to set the importance factor Ki independently for each image-capturing region. That is, it is possible to set an importance factor K for an image-capturing region without taking account of the influence of another image-capturing region. For instance, in a case where the image data captured with the image-capturing device 3 includes an image-capturing region with a high risk of liquid leakage, or conversely, an image-capturing region with a low risk of occurrence of liquid leakage, it is possible to correct the pixel count detected in each image-capturing region by using the importance factor Ki set independently for each image-capturing region.

In some embodiments, the importance factor Ki may be set to be greater for an image-capturing region with a higher risk of liquid leakage from the device 2.

If a pixel count corresponding to the color of the discolored leakage liquid 6 is detected in an image-capturing region with a high risk of liquid leakage, the liquid leakage may continue even if the currently detected pixel count is small. Thus, if liquid leakage is detected in such an image-capturing region, there is a greater necessity to take some measure in an early stage.

In this regard, with above configuration, the importance factor Ki is set to be greater in an image-capturing region with a higher risk of liquid leakage from the device 2. Thus, if a pixel count corresponding to the color of the discolored leakage liquid 6 is detected in such an image-capturing region, it is possible to determine in an early stage that liquid leakage is occurring.

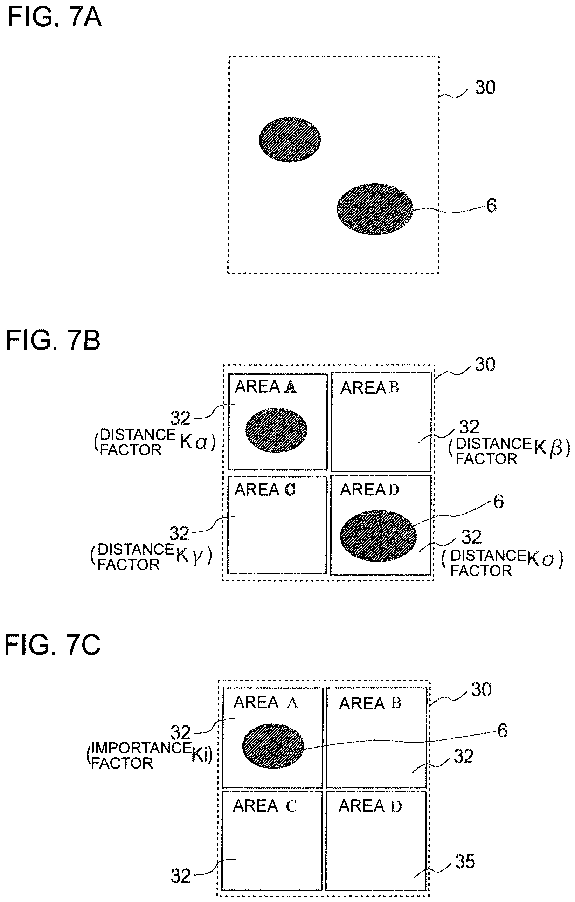

In some embodiments, the controller 10 may be configured to determine occurrence of liquid leakage only on the basis of the pixel count detected in an image-capturing region (e.g. image region 32) other than an excluded region 35 (see FIG. 7 for instance) that is to be excluded from to determination of liquid leakage.

The above excluded region 35 can be defined by setting the factors such as the above described distant factor K and the importance factor Ki to zero. The image-capturing region other than the excluded region 35 is set by determining in advance only the image-capturing region to be taken in account as an extraction range, and not taking into account (e.g. ignoring or excluding) the remaining region.

With the above configuration, in the captured image 30, it is possible to set an unnecessary region that can be ignored or a region with a low importance degree to be the excluded region 35 to be excluded from the region for which liquid leakage is determined. Accordingly, it is possible to narrow down the detection object to liquid leakage that occurs in the image-capturing region to be taken into account, and thus it is possible to reduce wrong detection in a case where a color similar to that of the liquid leakage exists in the excluded region 35, and improve the accuracy in liquid leakage detection.

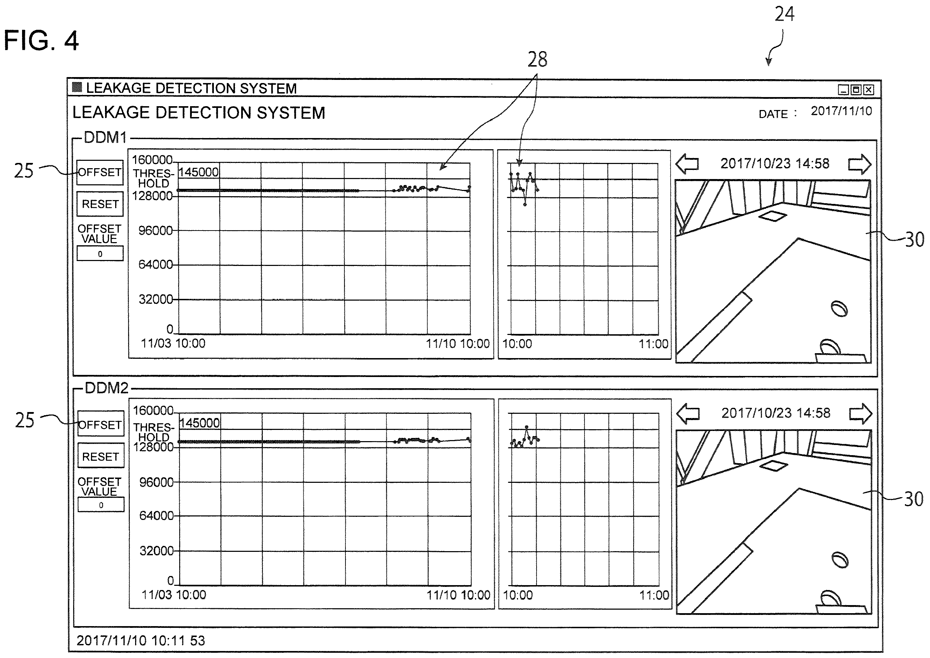

FIG. 4 is a diagram showing an example of a control display according to an embodiment.

As shown in FIG. 4 as a non-limited example, in some embodiments, the liquid leakage detection system 1 may further include a display part 20 configured to display the image 30 captured by the image-capturing device 3, and at least one of a time-series change history 28 of the pixel count or a result of determination by the controller 10. Accordingly, it is possible to display, on the display 20, a combination of the image 30 including the leakage liquid 6 from the device 2 and either one of the time-series change history of the pixel count or the result of determination by the controller 10, and thus an operator can visually monitor presence or absence of liquid leakage from the device 2, the extent of liquid leakage, the progression rate of liquid leakage, or the like.

In some embodiments, the controller 10 may further include a notification part 21 for notifying occurrence of liquid leakage if the pixel count is not smaller than a threshold (see FIG. 2).

The notification part 21 may be of a variety of types as long as it can make an operator recognize occurrence of liquid leakage through vision, sound, touch, or the like, through operation of light, sound, vibration, or the like. For instance, an alarm buzzer or a warning light for notifying occurrence of liquid leakage from the device 2 may be provided separately, or a control screen 24 shown on the above described display part 20 or a mobile terminal may display occurrence of liquid leakage.

Accordingly, with the notification part 21, when liquid leakage is detected, it is possible to inform, for instance, an operator of the leakage detection system 1 by a variety of methods (see FIG. 3, step S6). Accordingly, it is possible to take prompt measures, for instance, following occurrence of liquid leakage.

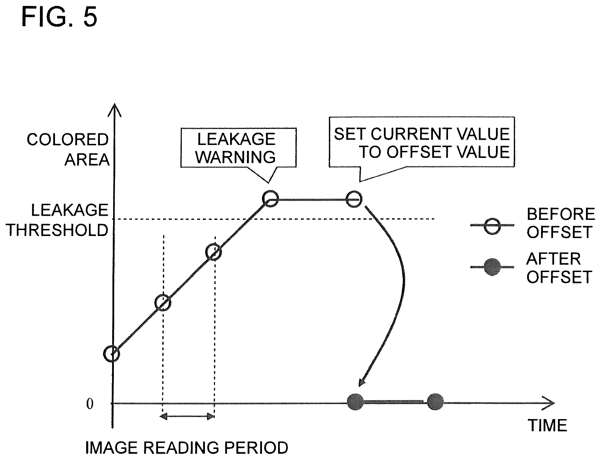

FIG. 5 is a schematic diagram showing an offset process according to an embodiment.

As shown in FIGs. 4 and 5 as a non-limited example, in some embodiments, the liquid leakage detection system 1 may further include a setting part 25 for setting the pixel count at the time of no liquid leakage as an offset amount. In this case, the controller 10 may be configured to perform an offset process on the pixel count by using the offset amount set by the setting part 25.

With the above configuration, for instance, it is possible to set with the setting part in advance to exclude, from the object of determination of liquid leakage, a member having a color similar to that of the discolored leakage liquid 6 or an accidentally-adhering liquid that has no relation to liquid leakage from the device 2, which may be included in the image 30. Accordingly, it is possible to determine by using the pixel count corresponding to the actual liquid leakage from the device to be detected, and thus it is possible to reduce wrong detection and improve detection accuracy.

In some embodiments, the color changing agent 7 may be oxygen (O₂) in air. Accordingly, the leakage liquid 6 from the device 2 is oxidized and discolored through reaction with oxygen in air, and the image-capturing device 3 captures an image of the discolored leakage liquid 6. Thus, it is possible to detect liquid leakage from the device 2 without requiring a color changing agent 7 other than oxygen in the air.

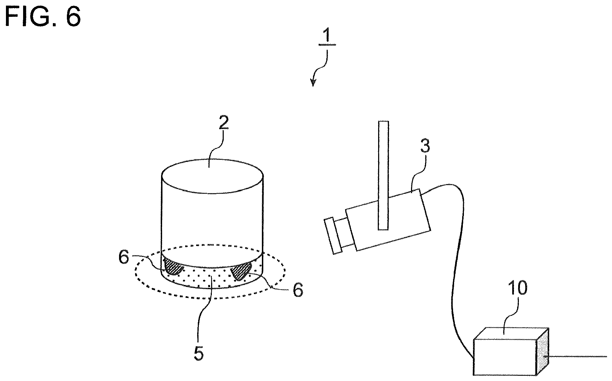

FIG. 6 is a schematic diagram of a configuration example of a liquid leakage detection system according to another embodiment.

In some embodiments, the color changing agent 7 may include a pigment that changes its color through contact with the leakage liquid 6, and the image-capturing range of the image-capturing device 3 may include a pigment applied region 5 over which a pigment serving as the color changing agent 7 is applied, in at least a part of the outer periphery of the device 2 or below the device 2.

With the above configuration, at least a part of the outer periphery of the device 2 or below the device 2 includes the pigment applied region 5, and thus the leakage liquid 6 from the device 2 makes contact with the pigment and changes its color. That is, it is no longer necessary to wait for color change caused by oxidization of the leakage liquid 6 to happen, which makes it possible to reduce time lag between occurrence of the leakage liquid 6 and color change, and to shorten considerably the time from occurrence of liquid leakage to detection of occurrence of the liquid leakage. For instance, it is possible to detect occurrence of liquid leakage real time. Further, by selectively using a type of pigment that shows color only upon reaction with a particular liquid used in the device 2, it is possible to determine liquid leakage in the captured image 30 more easily, and to identify the type of leakage liquid (e.g. water or oil) and a location in the device using the liquid, which makes it possible to improve the accuracy in detection of occurrence of liquid leakage.

In some embodiments, the imaging range of the image-capturing device 3 may include a liquid absorption member 4 disposed below the device 2 (see FIG. 1).

The liquid absorption member 4 may be fabric or paper capable of absorbing liquid such as water and oil, and may be a paper material such as paper towel, or waste cloth.

With the above liquid absorption member 4, for the leakage liquid 6 from the device 3 normally falls downward, it is possible to detect occurrence of liquid leakage from the device 2 more appropriately by capturing, with the image-capturing device 3, an image of the leakage liquid 6 adhering to the liquid absorption member 4 disposed below the device 3. Furthermore, for instance, even in a case where there is a blind spot on the device 2 itself or around thereof, it is possible to detect liquid leakage by arranging the image-capturing device 3 in a position where an image of the liquid absorption member 4 can be captured. Thus, it is possible to obtain a low-cost liquid leakage detection system 1 capable of detecting leakage of the leakage liquid 6 appropriately with a smaller number of image-capturing devices 3.

Furthermore, a pigment that serves as the color changing agent 7 may be applied to the liquid absorption member 4.

A liquid leakage detection method according to at least one embodiment of the present disclosure is a liquid leakage detection method for detecting oil leakage from the device 2, and includes an image-capturing step (SI) of capturing an image of the leakage liquid 6 from the device 2, and a detection step (S2 to S5) of detecting occurrence of liquid leakage by using image data obtained in the image-capturing step (SI).

In the detection step (S2 to S5), it is determined whether a pixel count corresponding to the color of the leakage liquid 6 having a color changed by contact with a color changing agent 7 outside the device 2, and it is determined that liquid leakage is occurring if the pixel count is not smaller than a threshold. Accordingly, it is possible to detect occurrence of liquid leakage by determining with the controller 10 that the pixel count corresponding to the color of the discolored leakage liquid 6 is not smaller than the threshold, in the image data obtained in the image-capturing step (S1).

In some embodiments, any one of the above methods may include a display step (see FIG. 3, step S7) of displaying the image 30 captured in the image-capturing step (SI), and at least one of the time-series change history 28 of the pixel count or the result of determination in the detection step (S2 to S5). Accordingly, it is possible to display, on the display part, a combination of the image 30 including the leakage liquid 6 from the device 2 and either one of the time-series change history 28 of the pixel count or the result of determination in the detection step (S2 to S5), and thus an operator can visually monitor presence or absence of liquid leakage from the device 2, the extent of liquid leakage, the progression rate of liquid leakage, or the like.

As described above, according to some embodiments of the present disclosure, it is possible to detect liquid leakage from a device accurately.

Embodiments of the present invention were described in detail above, but the present invention is not limited thereto, and various amendments and modifications may be implemented without departing from the scope of the appended claims.

## Claims

1. A liquid leakage detection system (1) for detecting liquid leakage from a device (2)-comprising:
an image-capturing device (3) for capturing an image of a leakage liquid from the device (2); and
a controller (10) for detecting occurrence of the liquid leakage by using image data obtained by the image-capturing device (3),
wherein the controller (10) is configured to:
determine whether, in the image data, a pixel count corresponding to a color of the leakage liquid discolored by contact with a color changing agent outside the device (2) is not smaller than a threshold; and
determine that the liquid leakage is occurring if the pixel count is not smaller than the threshold;
**characterized in that** the controller (10) is configured to correct the pixel count by using a distance factor which is set depending on a distance : between the device (2) and the image-capturing device (3).

2. The liquid leakage detection system (1) according to claim 1,
wherein, the greater the distance : between the device and the image-capturing device (3) is, the greater the distance factor is set to be.

3. The liquid leakage detection system (1) according to any one of claims 1 or 2,
wherein the controller (10) is configured to correct the pixel count by using an importance factor which is set independently for each image-capturing region.

4. The liquid leakage detection system (1) according to claim 3,
wherein the importance factor is set to be greater for the image-capturing region having a higher risk of the liquid leakage from the device.

5. The liquid leakage detection system (1) according to claim 3 or 4,
wherein the controller (10) is configured to determine occurrence of the liquid leakage on the basis of only a pixel value detected in the image-capturing region other than an excluded region related to determination of the liquid leakage.

6. The liquid leakage detection system (1) according to any one of claims 1 to 5,
further comprising a setting part (25) for setting, as an offset amount, the pixel count at the time when the liquid leakage is not present,
wherein the controller (10) is configured to perform an offset process on the pixel count by using the offset amount set by the setting part (25).

7. The liquid leakage detection system (1) according to any one of claims 1 to 6,
wherein the controller (10) further includes a notification part (21) configured to notify occurrence of the liquid leakage if the pixel count is not smaller than the threshold.

8. The liquid leakage detection system (1) according to any one of claims 1 to 7,
wherein the color changing agent is oxygen in air.

9. The liquid leakage detection system (1) according to any one of claims 1 to 8,
wherein the color changing agent contains a pigment which discolors itself through contact with the leakage liquid, and
wherein an image-capturing range of the image-capturing device (3) includes a pigment applied region in which a pigment is applied to at least a part of an outer periphery of the device (2) or below the device (2).

10. The liquid leakage detection system (1) according to any one of claims 1 to 9,
wherein an image-capturing range of the image-capturing device (3) includes a liquid absorption member disposed below the device (2).

11. The liquid leakage detection system (1) according to any one of claims 1 to 10,
further comprising a display part (20) configured to display an image captured by the image-capturing part (3) and at least one of a time-series change history of the pixel count or a result of determination by the controller (10).

12. A method for detecting a leakage liquid from a device, the method comprising:
an image-capturing step of capturing an image of a leakage liquid from the device (2) using an image capturing device (3); and
a detection step of detecting occurrence of the liquid leakage by using image data obtained in the image-capturing step
wherein the detection step comprises:
determining whether, in the image data, a pixel count corresponding to a color of the leakage liquid discolored by contact with a color changing agent outside the device is not smaller than a threshold;
determining that the liquid leakage is occurring if the pixel count is not smaller than the threshold;
**characterized in that** the method further comprises correcting the pixel count by using a distance factor which is set depending on a distance between the device (2) and the image-capturing device (3).

13. The method for detecting a leakage liquid from a device according to claim 12,
further comprising a notification step of notifying occurrence of the liquid leakage if the pixel count is not smaller than the threshold.

14. The method for detecting a leakage liquid from a device according to claim 12 or 13, further comprising a display step of displaying an image captured in the image-capturing step and at least one of a time-series change history of the pixel count or a result of determination in the detection step.

## Patentansprüche

1. Flüssigkeitsleck-Erfassungssystem (1) zum Erfassen eines Flüssigkeitslecks aus einer Vorrichtung (2), umfassend:
eine Bildaufnahmevorrichtung (3) zum Aufnehmen eines Bildes einer Leckflüssigkeit von der Vorrichtung (2); und
eine Steuerung (10) zum Erkennen des Auftretens des Flüssigkeitslecks unter Verwendung von Bilddaten, die von der Bildaufnahmevorrichtung (3) erhalten werden,
wobei der Steuerung (10) so konfiguriert ist:
um zu bestimmen, ob in den Bilddaten eine Pixelanzahl, die einer Farbe der Leckflüssigkeit entspricht, die sich durch Kontakt mit einem Farbänderungsmittel außerhalb der Vorrichtung (2) verfärbt, nicht kleiner als ein Schwellenwert ist; und
um zu bestimmen, dass das Flüssigkeitsleck auftritt, wenn die Pixelanzahl nicht kleiner als der Schwellenwert ist;
**dadurch gekennzeichnet, dass**
die Steuerung (10) so konfiguriert ist, dass sie die Pixelanzahl unter Verwendung eines Abstandsfaktors korrigiert, der in Abhängigkeit von einem Abstand zwischen der Vorrichtung (2) und der Bildaufnahmevorrichtung (3) eingestellt wird.

2. Das Flüssigkeitsleck-Erfassungssystem (1) nach Anspruch 1,
wobei, je größer der Abstand zwischen der Vorrichtung (2) und der Bildaufnahmevorrichtung (3) ist, desto größer wird der Abstandsfaktor eingestellt.

3. Das Flüssigkeitsleck-Erfassungssystem (1) nach einem der Ansprüche 1 oder 2,
wobei die Steuerung (10) so konfiguriert ist, dass sie die Pixelanzahl unter Verwendung eines Wichtungsfaktors korrigiert, der für jeden Bildaufnahmebereich unabhängig eingestellt wird.

4. Das Flüssigkeitsleck-Erfassungssystem (1) nach Anspruch 3,
wobei der Wichtungsfaktor für den Bildaufnahmebereich mit einem höheren Risiko des Flüssigkeitslecks aus der Vorrichtung größer eingestellt ist.

5. Das Flüssigkeitsleck-Erfassungssystem (1) nach Anspruch 3 oder 4,
wobei die Steuerung (10) so konfiguriert ist, dass sie das Auftreten des Flüssigkeitslecks auf der Basis nur eines Pixelwertes bestimmt, der in dem Bildaufnahmebereich erfasst wird, mit Ausnahme eines ausgeschlossenen Bereichs, der mit der Bestimmung des Flüssigkeitslecks in Zusammenhang steht.

6. Das Flüssigkeitsleck-Erfassungssystem (1) nach einem der Ansprüche 1 bis 5,
ferner umfassend ein Einstellteil (25) zum Einstellen der Pixelanzahl als einen Offsetbetrag zu dem Zeitpunkt, wenn das Flüssigkeitsleck nicht vorhanden ist,
wobei die Steuerung (10) so konfiguriert ist, dass sie einen Offsetprozess an der Pixelanzahl unter Verwendung des durch das Einstellteil (25) eingestellten Offestbetrags durchführt.

7. Das Flüssigkeitsleck-Erfassungssystem (1) gemäß einem der Ansprüche 1 bis 6,
wobei die Steuerung (10) ferner ein Benachrichtigungsteil (21) enthält, das so konfiguriert ist, dass es das Auftreten des Flüssigkeitslecks meldet, wenn die Pixelanzahl nicht kleiner als der Schwellenwert ist.

8. Das Flüssigkeitsleck-Erfassungssystem (1) gemäß einem der Ansprüche 1 bis 7,
wobei das Farbänderungsmittel Sauerstoff in Luft ist.

9. Das Flüssigkeitsleck-Erfassungssystem (1) nach einem der Ansprüche 1 bis 8,
wobei das Farbänderungsmittel ein Pigment enthält, das sich durch Kontakt mit der Leckflüssigkeit selbst verfärbt, und
wobei ein Bildaufnahmebereich der Bildaufnahmevorrichtung (3) einen Pigmentauftragsbereich umfasst, in dem ein Pigment auf mindestens einen Teil eines Außenumfangs der Vorrichtung (2) oder unterhalb der Vorrichtung (2) aufgetragen ist.

10. Das Flüssigkeitsleck-Erfassungssystem (1) nach einem der Ansprüche 1 bis 9,
wobei ein Bildaufnahmebereich der Bildaufnahmevorrichtung (3) ein Flüssigkeitsabsorptionselement enthält, das unter der Vorrichtung (2) angeordnet ist.

11. Das Flüssigkeitsleck-Erfassungssystem (1) nach einem der Ansprüche 1 bis 10,
ferner umfassend einen Anzeigeteil (20), der so konfiguriert ist, dass er ein von der Bildaufnahmevorrichtung (3) erfasstes Bild und mindestens eine zeitserielle Änderungshistorie der Pixelanzahl oder ein Ergebnis der Bestimmung durch die Steuerung (10) anzeigt.

12. Ein Verfahren zum Erfassen einer Leckflüssigkeit aus einer Vorrichtung, wobei das Verfahren umfasst:
einen Bilderfassungsschritt des Erfassens eines Bildes einer Leckflüssigkeit aus der Vorrichtung (2) unter Verwendung einer Bildaufnahmevorrichtung (3); und
einen Erfassungsschritt zum Erfassen des Auftretens des Flüssigkeitslecks unter Verwendung der im Bildaufnahmeschritt erhaltenen Bilddaten,
wobei der Nachweisschritt umfasst:
Bestimmen, ob in den Bilddaten eine Pixelzahl, die einer Farbe der Leckflüssigkeit entspricht, die sich durch Kontakt mit einem Farbänderungsmittel außerhalb der Vorrichtung verfärbt, nicht kleiner als ein Schwellenwert ist;
Bestimmen, dass die Leckflüssigkeit auftritt, wenn die Pixelanzahl nicht kleiner als der Schwellenwert ist;
**dadurch gekennzeichnet, dass** das Verfahren ferner umfasst
die Korrektur der Pixelzahl durch Verwendung eines Abstandsfaktors, der in Abhängigkeit von einem Abstand zwischen der Vorrichtung (2) und der Bildaufnahmevorrichtung (3) eingestellt wird.

13. Das Verfahren zum Erfassen einer Leckflüssigkeit aus einer Vorrichtung nach Anspruch 12,
ferner umfassend einen Benachrichtigungsschritt zur Benachrichtigung über das Auftreten des Flüssigkeitslecks, wenn die Pixelanzahl nicht kleiner als der Schwellenwert ist.

14. Verfahren zum Erfassen einer Leckflüssigkeit aus einer Vorrichtung nach Ansprüchen 12 oder 13, ferner umfassend einen Anzeigeschritt des Anzeigens eines in dem Bildaufnahmeschritt aufgenommenen Bildes und mindestens eines von einer Zeitserien-Änderungshistorie der Pixelanzahl oder eines Bestimmungsergebnisses in dem Erfassungsschritt.

## Revendications

1. Système de détection de fuite de liquide (1) destiné à détecter une fuite de liquide depuis un dispositif (2) comprenant :
un dispositif de capture d'image (3) destiné à capturer une image d'un liquide de fuite depuis le dispositif (2) ; et
un dispositif de commande (10) destiné à détecter une survenue de la fuite de liquide en utilisant des données d'image obtenues par le dispositif de capture d'image (3),
dans lequel le dispositif de commande (10) est configuré pour :
déterminer si, dans les données d'image, un nombre de pixels correspondant à une couleur du liquide de fuite décoloré par contact avec un agent de changement de couleur à l'extérieur du dispositif (2) n'est pas plus petit qu'un seuil ; et
déterminer que la fuite de liquide survient si le nombre de pixels n'est pas plus petit que le seuil ;
**caractérisé en ce que**
le dispositif de commande (10) est configuré pour corriger le nombre de pixels en utilisant un facteur de distance qui est établi en fonction d'une distance entre le dispositif (2) et le dispositif de capture d'image (3).

2. Système de détection de fuite de liquide (1) selon la revendication 1,
dans lequel, plus la distance entre le dispositif (2) et le dispositif de capture d'image (3) est grande, plus le facteur de distance établi est grand.

3. Système de détection de fuite de liquide (1) selon l'une quelconque des revendications 1 ou 2,
dans lequel le dispositif de commande (10) est configuré pour corriger le nombre de pixels en utilisant un facteur d'importance qui est établi indépendamment pour chaque région de capture d'image.

4. Système de détection de fuite de liquide (1) selon la revendication 3,
dans lequel le facteur d'importance est établi pour être plus grand pour la région de capture d'image ayant un risque plus élevé de fuite de liquide depuis le dispositif.

5. Système de détection de fuite de liquide (1) selon la revendication 3 ou 4,
dans lequel le dispositif de commande (10) est configuré pour déterminer une survenue de fuite de liquide sur la base uniquement d'une valeur de pixel détectée dans la région de capture d'image autre qu'une région exclue liée à une détermination de la fuite de liquide.

6. Système de détection de fuite de liquide (1) selon l'une quelconque des revendications 1 à 5,
comprenant en outre une partie de réglage (25) destinée à établir, en tant que quantité de décalage, le nombre de pixels au moment où la fuite de liquide n'est pas présente,
dans lequel le dispositif de commande (10) est configuré pour réaliser un processus de décalage sur le nombre de pixels en utilisant la quantité de décalage établie par la partie d'établissement (25).

7. Système de détection de fuite de liquide (1) selon l'une quelconque des revendications 1 à 6,
dans lequel le dispositif de commande (10) comporte en outre une partie de notification (21) configurée pour notifier la survenue de la fuite de liquide si le nombre de pixels n'est pas plus petit que le seuil.

8. Système de détection de fuite de liquide (1) selon l'une quelconque des revendications 1 à 7,
dans lequel l'agent de changement de couleur est l'oxygène de l'air.

9. Système de détection de fuite de liquide (1) selon l'une quelconque des revendications 1 à 8,
dans lequel l'agent de changement de couleur contient un pigment qui se décolore au contact du liquide de fuite, et
dans lequel un champ de capture d'image du dispositif de capture d'image (3) comporte une région de pigment appliqué dans laquelle un pigment est appliqué sur au moins une partie de la périphérie externe du dispositif (2) ou au-dessous du dispositif (2).

10. Système de détection de fuite de liquide (1) selon l'une quelconque des revendications 1 à 9,
dans lequel un champ de capture d'image du dispositif de capture d'image (3) comporte un organe d'absorption de liquide disposé au-dessous du dispositif (2).

11. Système de détection de fuite de liquide (1) selon l'une quelconque des revendications 1 à 10,
comprenant en outre une partie d'affichage (20) configurée pour afficher une image capturée par la partie de capture d'image (3) et au moins l'un d'un historique de changements successifs du nombre de pixels ou d'un résultat de détermination par le dispositif de commande (10).

12. Procédé de détection d'un liquide de fuite provenant d'un dispositif, le procédé comprenant :
une étape de capture d'image consistant à capturer une image d'un liquide de fuite depuis le dispositif (2) à l'aide d'un dispositif de capture d'image (3) ; et
une étape de détection consistant à détecter une survenue de la fuite de liquide en utilisant des données d'image obtenues à l'étape de capture d'image
dans lequel l'étape de détection comprend :
la détermination du fait que, dans les données d'image, un nombre de pixels correspondant à une couleur du liquide de fuite décoloré par contact avec un agent de changement de couleur à l'extérieur du dispositif n'est pas plus petit qu'un seuil ;
la détermination du fait que la fuite de liquide survient si le nombre de pixels n'est pas plus petit que le seuil ;
**caractérisé en ce que** le procédé comprend en outre la correction du nombre de pixels en utilisant un facteur de distance qui est établi en fonction d'une distance entre le dispositif (2) et le dispositif de capture d'image (3).

13. Procédé de détection d'un liquide de fuite provenant d'un dispositif selon la revendication 12,
comprenant en outre une étape de notification consistant à notifier la survenue de la fuite de liquide si le nombre de pixels n'est pas plus petit que le seuil.

14. Procédé de détection d'un liquide de fuite provenant d'un dispositif selon la revendication 12 ou 13, comprenant en outre une étape d'affichage consistant à afficher une image capturée à l'étape de capture d'image et au moins l'un d'un historique de changements successifs du nombre de pixels ou d'un résultat de détermination à l'étape de détection.
